# EUROPEAN PATENT APPLICATION

(11) **EP 2 801 887 A1**
(43) Date of publication of application: **12.11.2014**
(21) Application number: 13167384.0
(22) Date of filing: 10.05.2013
(51) Int. Cl.: G06F 1/16, A45C 11/00

(54) **Carrying case used with a portable electronic device**

(71) Applicant: BlackBerry Limited, Waterloo, ON N2K 0A7 (CA)
(72) Inventor: Barreca, Matteo, Demetrio, Waterloo, Ontario N2L 3W8 (CA)
(74) Representative: MERH-IP Matias Erny Reichl Hoffmann

(57) **Abstract**

The present disclosure is generally directed to a carrying case device or apparatus and methods by which a user of a portable electronic device-such as tablet computer, smart phone, game display or navigation device- can use the portable electronic device with the carrying case. The carrying case includes a holder that is configured to receive the portable electronic device, a keyboard section that includes a physical keyboard, and a cover section. The carrying case may be arranged in different configurations. The portable electronic device may automatically detect the configuration of the carrying case and can set or adjust its own functionality accordingly.

## Description

### FIELD

The present disclosure relates generally to housing assemblies for electronic devices, especially housing assemblies used with portable electronic devices.

### BACKGROUND

Portable electronic devices have gained widespread use and may support a variety of functions including, for example, telephonic, electronic messaging, navigating, gaming and managing personal information. Portable electronic devices may include, for example, a tablet computer, a smart phone, a game display, a navigation device (such as a global positioning system (GPS) device), a music or media player, an electronic book device (or e-reader) and the like. The portable electronic device may be handheld, that is, sized and shaped to be held or carried in a human hand, and typically used while so held.

Many portable electronic devices include a touch-sensitive display, also known as a touchscreen display, which is used for output and input. Many portable electronic devices with touchscreens support a virtual keyboard, which may be thought of as a keyboard implemented in software rather than in hardware. From the point of view of a user, the portable electronic device displays on the touchscreen a set of letters (usually the letters are arranged as they would be on a physical keyboard), and the user types by touching the touchscreen proximate to a desired letter.

### SUMMARY

According to a broad aspect, there is disclosed a device-which may be called a carrying case-that includes a holder configured to receive a portable electronic device, a keyboard section that comprises a physical keyboard, and a cover section. The cover section is physically coupled to the keyboard section by a first foldable portion and the keyboard section is physically coupled to the holder by a second foldable portion. The holder, the keyboard section and the cover section may be arranged laterally, and the holder may comprise a shell-type receptacle sized and shaped to receive the portable electronic device. Also disclosed is a method by which the portable electronic device may operate one or more functions in response to the configuration of such a carrying case. The method includes receiving at least one detector signal, determining a configuration of the carrying case as a function of the detector signal and operating a function of the portable electronic device as a function of the configuration.

### BRIEF DESCRIPTION OF THE DRAWINGS

Embodiments of the present disclosure will now be described, by way of example only, with reference to the attached figures. Although there may be similarities among the devices depicted in the figures, the figures do not necessarily depict exactly the same embodiments.

FIG. 1 is a perspective view of a carrying case holding a portable electronic device, according to non-limiting implementations.

FIG. 2 depicts a block diagram of a portable electronic device for that may work with a carrying case such as the carrying case shown in FIG. 1, according to non-limiting implementations.

FIG. 3 is a plan view of a carrying case, according to non-limiting implementations.

FIG. 4A is a cross-sectional view of a portable electronic device surrounded by a carrying case, with the carrying case in a stowed configuration.

FIG. 4B is a cross-sectional view of a portable electronic device surrounded by a carrying case, with the carrying case in a typing configuration.

FIG. 5 is a perspective view of a carrying case, according to non-limiting implementations.

FIG. 6A is a plan view of an illustrative portable electronic device.

FIG. 6B is a plan view of the illustrative portable electronic device of FIG. 6A, surrounded by the carrying case of FIG. 3, with the carrying case being in the typing configuration of FIG. 4B, according to non-limiting implementations..

FIG. 7 is a flow diagram illustrating operations of a portable electronic device in relation to a carrying case, according to non-limiting implementations.

FIG. 8 is a flow diagram illustrating a typical decision chart by which a portable electronic device may operate as a function of a configuration of a carrying case, according to non-limiting implementations.

### DETAILED DESCRIPTION

The present disclosure describes an apparatus or device-which will be called a carrying case-and methods by which a user of a portable electronic device can use the portable electronic device with the carrying case. The disclosure further describes methods by which a user of a portable electronic device can use the portable electronic device with a physical keyboard, or with a virtual keyboard. The carrying case may be especially useful with a portable electronic device that includes a touchscreen display but that lacks a physical keyboard. The disclosure further describes methods by which a user of a portable electronic device can use the portable electronic device with a physical keyboard and contemporaneously use a touchscreen of the portable electronic device.

In a typical use, the portable electronic device is received by the carrying case. By rearranging the elements (or sections) of the carrying case, the user may have access to a physical keyboard, which is a part of the carrying case. The physical keyboard may overlay the display of the portable electronic device. The carrying case may also serve as a conventional carrying case and may further support use of the portable electronic device in its ordinary fashion, for example, as a device in which input is received in part via a touchscreen.

The present disclosure also describes examples of apparatus and techniques by which a portable electronic device can automatically determine the configuration of the carrying case, and can adjust its own performance as a function of that configuration.

In this disclosure, elements (or components) may be described as "configured to" perform one or more functions. In general, an element that is configured to perform a function is suitable for performing the function, or is adapted to perform the function or is otherwise capable of performing the function. The function or the capability of performing the function need not be required in all embodiments. In addition, the capability of performing a function does not necessarily indicate that the function is being performed all the time. For example, an element that may be configured to communicate wirelessly with another element, but the elements need not be constantly communicating wirelessly.

Further, in this disclosure, the term coupled may be employed in many contexts. In general, components that are "communicatively coupled" are configured to communicate (that is, they are capable of communicating) in any fashion for any duration, such as by way of electric signals, optical signals, wireless signals, or any combination thereof. The communication may be one-way or two-way communication. Components are "physically coupled" when they are attached or connected or joined to one another, in any fashion, whether releasably or substantially permanently, so that physical activity of one component generally affects the other. The physical attachment may be direct or by way of one or more intermediate elements. According to context, two components that are physically coupled may behave as a single element. In some cases, physically coupled elements may be integrally formed, e.g., part of a single-piece article that may share structures and materials. In other cases, physically coupled elements may comprise discrete components that may be fastened together in any fashion. Physical coupling may also include a combination of discrete components fastened together, and components fashioned as a single piece.

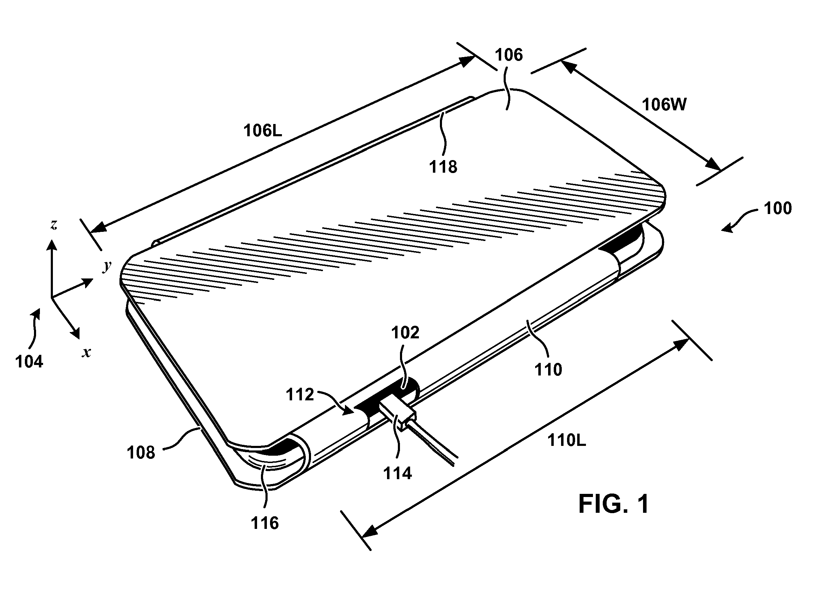

FIG. 1 shows an illustrative carrying case 100. The carrying case 100 surrounds a portable electronic device 102. In FIG. 1, the portable electronic device 102 is mostly concealed from view. For purposes of explanation, however, the portable electronic device 102 includes a touchscreen display that is facing upward; that is, in relation to the coordinate system 104, the touchscreen display faces in the z-direction. That the carrying case 100 is configured to surround the portable electronic device 102 generally means that the carrying case 100 may be sized and shaped to completely or substantially or largely encase the portable electronic device 102, thereby affording some protection to the portable electronic device 102 from contaminants, exposure, impacts and the like. The carrying case 100 may be sized or shaped for use with a particular electronic device or a group of electronic devices. The specific form factor of the carrying case 100 can be varied or otherwise configured to suit the particular requirements of a given electronic device.

The carrying case 100 includes a cover section 106. The cover section 106 covers or conceals the touchscreen display of the portable electronic device 102 in FIG. 1, and thereby protects the touchscreen display from contaminants, exposure, impacts and the like. The cover section 106 may be constructed of a non-flexible material, for example, or may include stiffeners to give the cover section 106 some structural integrity. The cover section 106 may be constructed of any material or combination of materials, including but not limited to plastic, metal, silicone, leather or ceramic. The materials may be chosen for any number of reasons, such as durability, water resistance, weight, padding or other shock resistance, security, texture or aesthetic qualities.

The cover section 106 of the illustrative carrying case 100 is substantially planar and rectangular. The cover section 106 has a length 106L (along the y-direction, in relation to the coordinate system 104) and a width 106W (along the x-direction, in relation to the coordinate system 104). The size and shape of the cover section 106 may be selected to cover a face or surface of the portable electronic device 102. The cover section 106 may have any thickness (along the z-direction, in relation to the coordinate system 104), but typically a cover may be a couple of millimeters thick or less.

The cover section 106 is physically coupled to a keyboard section 108 by a first foldable portion 110. That is, the cover section 106 is physically coupled to the first foldable portion 110, and the first foldable portion 110 is physically coupled to the keyboard section 108. The first foldable portion 110 may be physically coupled to the cover section 106 and the keyboard section 108 in any fashion, such as by stitching, adhesives, unitary construction, clasps, and the like. In a variation, the physical coupling may be such that a user may physically attach and detach the first foldable portion 110 from the cover section 106 or keyboard section 108, e.g., by a magnetic hinge. For purposes of illustration and explanation, however, it will be assumed that the first foldable portion 110 is not detachable.

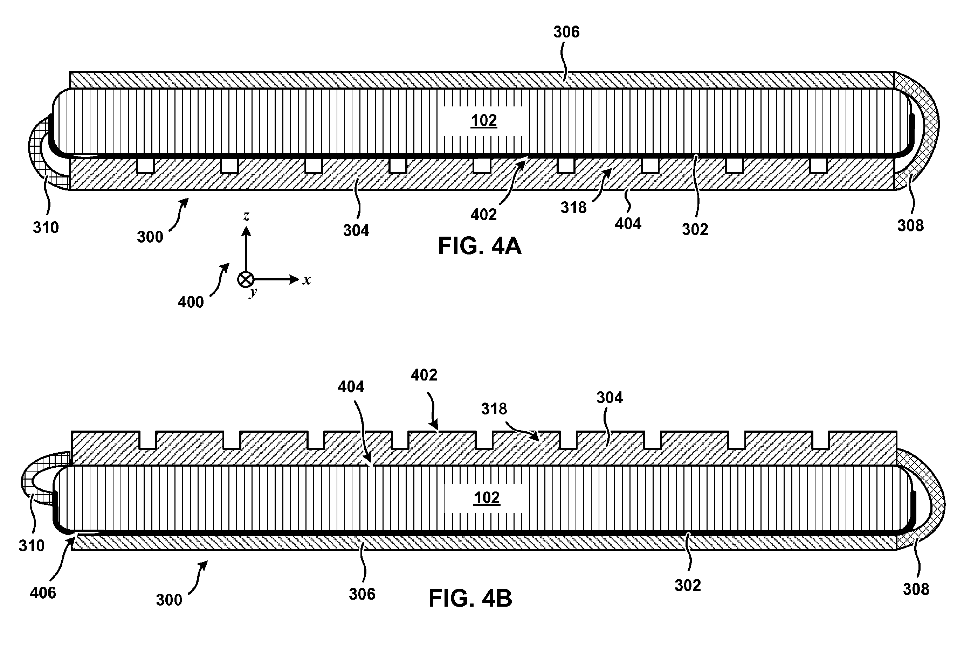

Various embodiments of the keyboard section 108 will be discussed in more detail below. The first foldable portion 110 may be made from any material or combination of materials, such as plastic, silicone, rubber, elastic, leather, cloth, webbing or other fabric. The first foldable portion 110 may function as a flexible joint or hinge. In some embodiments, the first foldable portion 110 may include a conventional hinge or other jointed elements. In other embodiments, the first foldable portion 110 may include bendable or pliable materials. The first foldable portion 110 functions to allow the cover section 106 to be moved with respect to other parts of the carrying case 100. In ordinary use, for example, a user may lift the cover section 106 to uncover the portable electronic device 102, and the first foldable portion 110 enables the cover section 106 to swing much like a cover of a book. As depicted in FIG. 1, the length 110L of first foldable portion 110 may be (but need not be) less than the length 106L of the cover section 106. There is no specific width for the first foldable portion 110, but the first foldable portion 110 may have a width that can accommodate the thickness of the portable electronic device 102, when the carrying case is in different configurations, such as those shown in FIGS. 4A and 4B.

The first foldable portion 110 may include one or more openings 112. That is, a surface of the first foldable portion 110 may be but need not be solid or continuous, and may define one or more apertures, discontinuities, notches, cutouts or other similar physical features. Such openings 112 may serve one or more functions, and may be sized and shaped as a function of the portable electronic device 102. For example, the portable electronic device 102 may include a button that can be depressed by a user, and the opening 112 may be located and sized so that the user can insert a finger through the opening 112 to press the button. In another example, and as illustrated in FIG. 1, the portable electronic device 102 may include a socket or port or other connector interface that can receive a connector 114. The connector 114 may supply communications functionality, for example, or electric power to the portable electronic device 102, or both. The opening 112 functions to enable the connector 114 to be mated to the connector interface without removing the portable electronic device 102 from the carrying case 100.

The keyboard section 108 is physically coupled to a holder 116 by a second foldable portion 118. The second foldable portion 118 may be made from any material or combination of materials, and may be constructed in a fashion similar to the first foldable portion 110. The second foldable portion 118 may be physically coupled to the keyboard section 108 or to the holder 116 in a fashion similar to the first foldable portion 110 being coupled to the keyboard section 108 and the cover section 106. The second foldable portion 118 may function as a flexible joint or hinge, and may enable the holder 116 or the keyboard section 108 to move with respect to one another. Optionally, the second foldable portion 118 may be detachable from the holder 116 or the keyboard section 108.

The holder 116 may be any kind of container, casing, pocket, shell or other receptacle. In general, the holder 116 is the element of the carrying case 100 that is configured to receive the portable electronic device 102. The portable electronic device 102 may be physically received in or mated to the holder 116, typically in a non-permanent fashion and typically without a need for tools. The physical mating of the portable electronic device 102 and the holder 116 generally prevents the inadvertent physical detachment of the portable electronic device 102 from the carrying case 100 in general and the holder 116 in particular. The holder 116 is typically sized and shaped for use with the portable electronic device 102. The holder 116 may be sized and shaped for a particular electronic device or for a group of electronic devices, and the specific form factor of the holder 116 can be varied or otherwise configured to suit the particular requirements of a given electronic device or devices. For example, the holder 116 may be sized and shaped to hold or receive a particular portable electronic device 102, and may have one or more physical features (such as cutouts, notches, openings, flaps and the like) to accommodate various physical features of the portable electronic device 102.

The holder 116, like the cover section 106, may be constructed of any material or combination of materials, including but not limited to plastic, metal, silicone, leather or ceramic. The materials may be chosen for any number of reasons, such as durability, water resistance, weight, padding or other shock resistance, security, texture or aesthetic qualities.

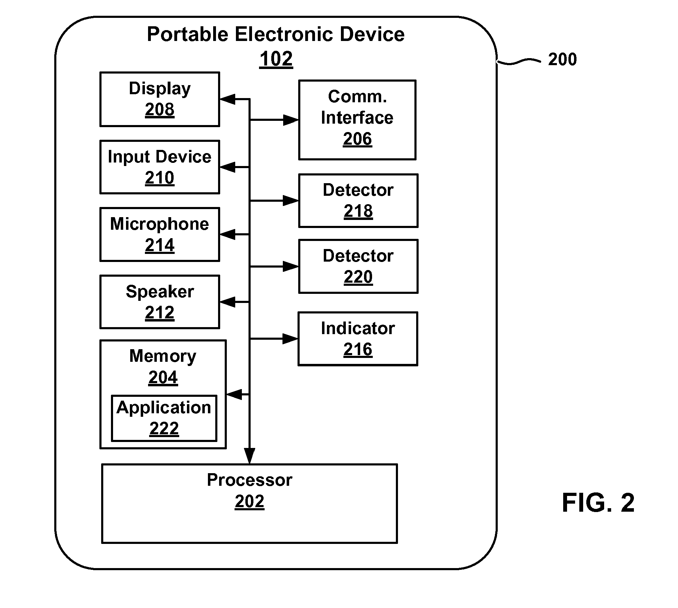

FIG. 2 depicts an illustrative portable electronic device 102 that can be used with the carrying case 100. The portable electronic device 102 comprises a housing 200, which houses the various components of the portable electronic device 102 and gives the portable electronic device 102 some structural integrity. The portable electronic device 102 includes one or more electronic components that may be operably, electrically or communicatively coupled to one another. The portable electronic device 102 includes, for example, a processor 202, such as a microprocessor, which may control one or more operations or functions of the portable electronic device 102. In FIG. 2, the processor 202 is connected with a memory 204, a communications interface 206, a display 208, an input device 210, a speaker 212, a microphone 214, and an indicator 216.

The memory 204 may comprise, for example, a non-volatile storage unit (e.g. Erasable Electronic Programmable Read Only Memory ("EEPROM"), Flash Memory, and the like) or a volatile storage unit (e.g. random access memory ("RAM"), and the like), or a combination thereof. Programming instructions that implement the functions of the portable electronic device 102 may be maintained in memory 204 and executed by the processor 202. Memory 204 may be an example of a tangible, non-transitory computer readable media that can store programming instructions executable on the processor 202.

The communications interface 206, display 208, input device 210, speaker 212, microphone 214, and indicator 216 are non-exclusive examples of input-output devices of the portable electronic device 102. The communications interface 206 may be, for example, a wireless communication subsystem. The display 208 may be a touchscreen display, for example, or any other kind of component that can display visual information. The input device 210 may be a button or key or touchpad or virtual keyboard or touchscreen, for example. (The input device 210 may also be a physical keyboard, but the typical use of the portable electronic device 102 with a carrying case 100 makes the presence of a physical keyboard on the portable electronic device 102 unnecessary.) The speaker 212 may be any component that can present audible information. The microphone 214 may be any component that can receive audible information. The indicator 216 may be any component that presents information or output visibly, audibly or tactilely, such as a light emitting diode or a vibrator. The components shown in FIG. 2 are not necessarily exclusive of one another, and may have overlapping functionality. A touchscreen, for example, may serve as a display 208, an input device 210, and indicator 216.

The electronic components may receive electronic power from a power pack or other power source (not shown). A typical power pack for a portable electronic device 102 includes a rechargeable battery.

The portable electronic device 102 is shown with detectors 218 and 220. There is no requirement that any particular number of detectors be present. In general, detectors 218, 220 respond to one or more sensed conditions (or absence of conditions) and generate, modulate or otherwise supply signals to the processor 202 as a function of the sensed conditions. Such conditions may include any conditions or circumstances of the surroundings, environment or nearby objects. For purposes of illustration, detector 218 may include a light sensor that responds to the presence or absence of light. Such a light sensor may detect, for example, whether ambient light exceeds a particular intensity, or such a light sensor may respond to a range of intensities or colours. For purposes of further illustration, detector 220 may include a magnetic sensor (such as a Hall Effect sensor) that responds to the presence of a magnetic field or the proximity of a detectable element such as a magnet or a piece of metal, for example. Other types of detectors may include heat detectors, proximity detectors, sound detectors, radio frequency identification (RFID) detectors, a camera, temperature sensors, pressure sensors, capacitive touch sensors and the like.

In general, the detectors 218, 220 are configured to detect (e.g., sense, distinguish, or otherwise respond to) conditions that indicate the configuration of a carrying case, such as the carrying case 100 shown in FIG. 1, in relation to the portable electronic device 102. For example, the detectors 218, 220 may supply signals to the processor 202 that are indicative of whether the cover section 106 covers the display 208 or not, or whether the keyboard section 108 covers or overlays the display 208 or not. As will be described below, the processor 202 may control the operations of the portable electronic device 102 depending upon whether the display 208 is uncovered, is covered by the keyboard section 108, or is covered by the cover section 106. In other words, the behaviour of the portable electronic device 102 may be a function of the configuration of the carrying case 100, and the portable electronic device 102 automatically senses the configuration of the carrying case 100 by way of the detectors 218, 220. Further, the portable electronic device 102 may be able to sense whether or not the portable electronic device 102 is being held in the carrying case 100.

In general, the behaviour of the portable electronic device 102 may be governed by the processor 202, which executes one or more software applications 222, which may be machine-readable instructions typically stored in memory 204. Software applications 222 may include, but are not limited to, instructions that control any input or output device or functionality. Software applications 222 may also include instructions directed to one or more methods or processes or jobs, such as word processing, electronic mail, telephone, gaming, browsing, and so forth.

One type of behaviour of the portable electronic device 102 may be a "sleep mode," in which the processor 202 disables, deactivates, turns off, or otherwise reduces the power consumption of one or more electronic components. For example, when one or more of the detectors 218, 220 sense that the display 208 is covered by the cover section 106, the processor 202 may power down the display 208 or enter sleep mode, which may reduce power consumption. Conserving power may result in a power source such as a rechargeable battery being able to function for a longer time between chargings. When the detectors 218, 220 sense that the display 208 is no longer covered by the cover section 106, the processor 202 may reactivate the display 208 or exit the sleep mode.

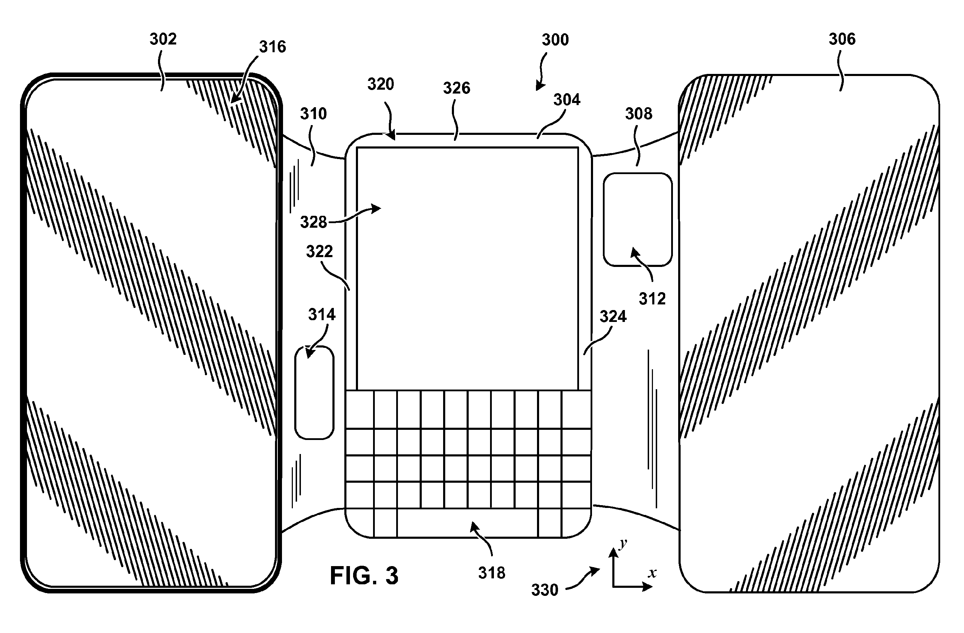

FIG. 3 is a plan view of a carrying case 300 illustrative of the concepts described herein. Carrying case 300 of FIG. 3 may be similar in many respects to carrying case 100 of FIG. 1. In contrast to the carrying case 100 in FIG. 1 surrounding a portable electronic device 102, the carrying case 300 in FIG. 3 may be deemed as lying flat, as on a table. The carrying case 300 includes a holder 302, a keyboard section 304 and a cover section 306. The cover section 306 is physically coupled to the keyboard section 304 by the first foldable portion 308, and the keyboard section 304 is physically coupled to the holder 302 by the second foldable portion 310. As depicted in FIG. 3, the first foldable portion 308 incudes one illustrative opening 312, and the second foldable portion 310 includes an illustrative opening 314.

As depicted in the example of FIG. 3, the holder 302 may include an outer surface 316 (the surface that would not ordinarily be in contact with the portable electronic device 102) that may protect the portable electronic device 102 from contaminants, exposure, impacts and the like. In a variation, as will be described below, the outer surface 316 need not be a totally continuous surface, but may define one or more openings.

The keyboard section 304 includes a physical keyboard 318. The physical keyboard 318, which may be a full alphanumeric keyboard (such as a "QWERTY" keyboard) or an abbreviated keyboard, for example, includes one or more physical keys or buttons that respond to depression by a user. In some embodiments, the physical keyboard 318 may include specialized buttons or keys or other controls, such as may be found on a game controller. In ordinary operation, a user may type using the physical keyboard 318 of the carrying case 300, the portable electronic device 102 will receive input signals from the physical keyboard 318 that are generated by the typing of the user, and the portable electronic device 102 will behave as if the physical keyboard 318 were an input device. For example, text typed on the physical keyboard 318 may appear on the display 208 of the portable electronic device 102.

The keyboard section 304 also includes a frame 320, which is formed from side members 322 and 324, and top member 326. The physical keyboard 318, the side members 322 and 324, and the top member 326 define a void 328. In a variation, the keyboard section 304 may include a bottom member (not shown) interposed between the physical keyboard 318 and the void 328, and the bottom member may be a part of the frame 320 and contribute to defining the void 328. The frame 320 helps give the keyboard section 304 structural integrity, and also serves as a physical coupling site for the foldable portions 308, 310. As will be described below, the void 328 represents a see-through region of the keyboard section 304 through which a user may see the display 208, and may comprise a translucent or transparent material, or may be an empty space devoid of solid material. When the void 328 is empty, the user may be able to touch the display 208, and thereby contemporaneously make use of the functionality of a touchscreen display, when the keyboard section 304 is atop the display 208. The user may, for example, select a data field by touching the display 208 through the void 328, and may promptly enter data into the field by typing on the physical keyboard 318.

In a typical embodiment, the keyboard section 304 includes circuitry that converts a user's depression of keys into one or more electronic signals, which are communicated to the processor 202 of the portable electronic device 102. The keyboard section 304 may be communicatively coupled with the portable electronic device 102, and the communication may be by any of several paths. In one embodiment, for example, the keyboard section 304 may be configured to communicate with the portable electronic device 102 via an electronic or optical data interface (not shown). In another embodiment, signals to or from the keyboard section 304 may be conveyed wirelessly. Wireless communication may include radio communication or over any of several wireless protocols, such as Bluetooth™, or near-field communication. In a further variation, a user's depression of one or more keys may be detected by a touchscreen of the portable electronic device 102, when the touchscreen is below and proximate to the physical keyboard 318.

The keyboard section 304 may be manufactured of any of several materials or combinations of materials, including metal, plastic and silicone. FIG. 3 shows the upper side of the keyboard section 304, that is, the side with which the user would ordinarily interact. The underside (not shown) may be constructed of materials chosen for any number of reasons, such as durability, water resistance, weight, padding, shock resistance, security, texture or aesthetic qualities. The keyboard section 304 optionally may include a circuit board, a processor, a communication system by which electronic signals may be communicated to the portable electronic device 102 and an independent power source (such as a rechargeable battery). Such components may be small and lightweight. In some embodiments, the keyboard section 304 may draw power from the portable electronic device 102 via a wired or wireless connection.

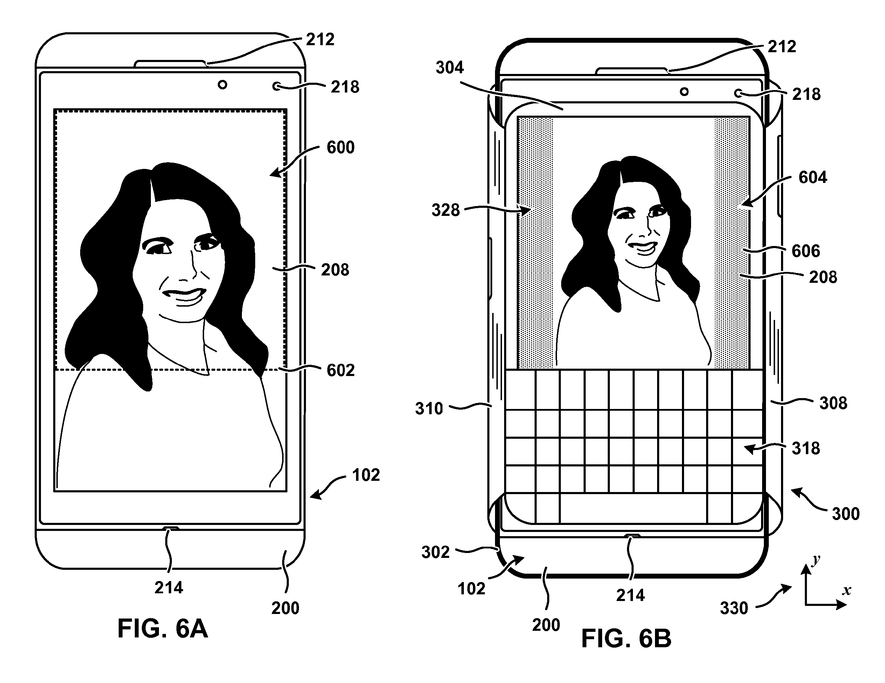

As shown in FIG. 3, the general overall perimeter shape of the holder 302, the keyboard section 304 and the cover section 306 is a rounded rectangle. Other shapes may be employed. In the embodiment of the carrying case 300 shown in FIG. 3, the length-by-width dimensions for the holder 302 and the cover section 306 are substantially similar to each other, but are different from the length-by-width dimensions for the keyboard section 304. In particular, the keyboard section 304 has a shorter length than the holder 302 and the cover section 306. That is, with reference to coordinate system 330, the keyboard section 304 is shorter in the y-direction than the holder 302 and the cover section 306. This optional disparity in dimensions may be advantageous in some circumstances, as will be illustrated with FIG. 6B.

The overall arrangement of the holder 302, the keyboard section 304 and the cover section 306 is that these elements are arranged laterally. That is, with reference to coordinate system 330, the elements are side-by-side along the x-direction, physically coupled to one another by the foldable portions 308, 310 along their longer sides. As shown in FIG. 3, the holder 302 is on the left and the cover section 306 is on the right; in a variation, the holder 302 could be on the right and the cover section 306 could be on the left.

FIGS. 4 and 4B illustrate two exemplary configurations of the carrying case 300 from FIG. 3 with the portable electronic device 102. The configurations are shown in cross-section. In both FIGS. 4A and 4B, the carrying case 300 surrounds the portable electronic device 102. The carrying case 300 includes the holder 302, the keyboard section 304, the cover section 306, the first foldable portion 308 and the second foldable portion 310.

In relation to the coordinate system 400, a touchscreen display (not shown) of the portable electronic device 102 faces in the z-direction. A user may conventionally deem the touchscreen to be uppermost, or on "top." In FIG. 4A, the cover section 306 is uppermost, and from the user's perspective is on top of (and covers) the touchscreen display. The keyboard section 304 is from the user's perspective underneath the portable electronic device 102 and the holder 302. The upper side 402 of the keyboard section 304, which includes the physical keyboard 318, is proximate to the holder 302 and is largely or entirely hidden from view. The underside 404 of the keyboard section 304 is underneath and outermost. This configuration may be called the "stowed" configuration, because the physical keyboard 318 is effectively inaccessible to a user. In the stowed configuration, the physical keyboard 318 may be protected from the elements and may be "out of the user's way," though still conveniently available by rearranging the cover section 306 and the keyboard section 304 to a different configuration.

FIG. 4B shows one example of a different configuration. In FIG. 4B, the keyboard section 304 is uppermost, and the cover section 306 is underneath and out of the way. From the user's perspective, the keyboard section 304 is on top of the touchscreen display and covers the touchscreen display (although the keyboard section 304 need not cover the touchscreen display as completely as does the cover section 306 in FIG. 4A). Furthermore, the physical keyboard 318 is oriented such that the keys are accessible and may be activated by a user; the upper side 402 of the keyboard section 304 is outermost and the underside 404 is proximate to the touchscreen display of the portable electronic device 102. This configuration may be called the "typing" configuration, because the physical keyboard 318 is effectively accessible to the user for typing.

The stowed configuration and the typing configuration shown in FIGS. 4A and 4B are not the only possible configurations of the carrying case. A user may, for example, starting with the stowed configuration of FIG. 4A, swing the cover section 306 open like a book. In this configuration, the user may interact with the portable electronic device 102 via one or more of the input devices of the portable electronic device 102, without using the physical keyboard 318, which may remain stowed.

A user may easily change configurations of the carrying case 300. As can be seen from a comparison of FIGS. 4A and 4B, the keyboard section 304, the cover section 306, the first foldable portion 308 and the second foldable portion 310 may be manipulated and their positions changed (with respect to the holder 302 and the received portable electronic device 102) to achieve the stowed and typing configurations, without a need of tools or disassembly. Colloquially speaking, the user may change from the stowed configuration to the typing configuration by flipping open the cover section 306, swinging the keyboard section 304 and the cover section 306 around, putting the keyboard section 304 on top of the touchscreen display, and putting the cover section 306 under the holder 302. To move from the typing configuration to the stowed configuration, the maneuvers may be reversed. In a typical situation, the change of configuration may be accomplished in a matter of seconds.

The cover section 306, whether the carrying case 300 is in the stowed configuration or the typing configuration, may be held in place by one or more optional fasteners 406. FIG. 4B shows one possible kind of fastener 406 in one possible location, but one or more fasteners may be located in many different places in or on the carrying case 300. The fasteners may, for example, be included in the cover section 306, the keyboard section 304, the holder 302, the foldable portions 308, 310, or any combination thereof. In general, the fastener 406 holds the cover section 306 in place in a non-permanent fashion, typically without a need for tools. The fastener 406 as depicted in FIG. 4B may be, for example, a magnet attached to the holder 302 that attracts a magnet or piece of metal embedded in a proximate location in the cover section 306. Other types of fasteners may include various latches, clips, hasps, hook-and-eye fasteners, zippers, elastic bands, snaps, and so forth. A first fastener may hold the cover section 306 in place when the carrying case 300 is in the stowed configuration, and a second fastener may hold the cover section 306 in place when the carrying case 300 is in the typing configuration.

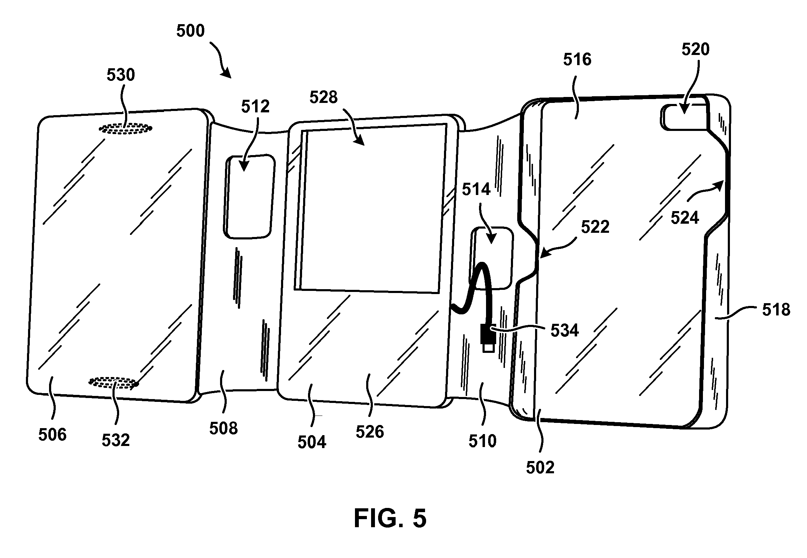

FIG. 5 is a perspective view of a carrying case 500 illustrative of the concepts described herein. Carrying case 500 of FIG. 5 may be similar in many respects to carrying case 100 of FIG. 1 and carrying case 300 of FIG. 3. The carrying case 500 includes a holder 502, a keyboard section 504 and a cover section 506. The cover section 506 is physically coupled to the keyboard section 504 by the first foldable portion 508, and the keyboard section 504 is physically coupled to the holder 502 by the second foldable portion 510. As depicted in FIG. 5, the first foldable portion 508 includes an opening 512, and the second foldable portion 510 includes another opening 514.

In the example of FIG. 5, the outer surface of the holder 502 is not visible. The holder 502 includes an inner surface 516 and one or more ledges 518 that may engage sides or edges of the portable electronic device 102 and hold the portable electronic device 102 (not shown in FIG. 5) with a friction fit. In this way, the illustrative holder 502 is a shell-type receptacle for the portable electronic device 102, and has comparable (though slightly larger in some dimensions) size and shape as the portable electronic device 102 received by it. Such a shell-type receptacle is generally thin in comparison to the thickness of the received portable electronic device 102.

The inner surface 516 defines an opening 520 that may be placed to allow a camera of the portable electronic device 102 to be used without removing the portable electronic device 102 from the carrying case 500. In addition, the shell-type holder 502 may include one or more cutouts 522, 524 in the ledges 518, which may serve one or more functions similar to openings of the foldable portions 508, 510.

In FIG. 5, the underside 526 of the keyboard section 504 is visible, but the physical keyboard is not. The keyboard section 504 defines a void 528.

In the example of FIG. 5, the cover section 506 includes two detectable elements 530, 532. The number and placement of the detectable elements 530, 532 are for purposes of illustration. The detectable elements 530, 532 may be any powered or unpowered components that can be detected by one or more detectors 218, 220 of the portable electronic device 102. The detectable elements 530, 532 may include, for example, one or more magnets, metal pieces, coils, RFID chips, and the like. In some embodiments, one or more detectable elements 530, 532 may also serve as fasteners. In some embodiments, detectable elements may be omitted.

Any number and kind and combination of detectable elements 530, 532 may be used. The detectable elements 530, 532 may be included in the cover section 506 in any fashion, such as being built in (and perhaps being generally invisible to a user), or being attached by mechanical agents such as adhesives or staples. The location of the detectable elements 530, 532 need not be as shown in FIG. 5. In general, a detectable element should be located so it can be detected by a detector of the portable electronic device 102 when the carrying case components are arranged in one fashion but not in another fashion. In this way, whether the detectable elements are detected by the detectors or not may be indicative of the configuration of the carrying case 500 with respect to the portable electronic device 102. Further, detectable elements 530, 532 need not be exclusively a part of the cover section 506. One or more detectable elements may be located on the keyboard section 504, for example, or the foldable portions 508, 510.

As previously mentioned, the keyboard section 504 may have a wired connection to the portable electronic device 102, such as by a connector that mates (electrically connects) with a micro-USB (universal serial bus) connector interface on the portable electronic device 102. A wired connection may establish one or more electrical connections between the portable electronic device 102 and the carrying case 500. Such electrical connection may enable signals from the keyboard section 504 to be communicated to the portable electronic device 102, and may enable electrical power to be delivered from the portable electronic device 102 to the keyboard section 504. FIG. 5 illustrates one example of a connector 534. A user may plug the connector 534 into a connector interface on the portable electronic device 102, before or after placing the portable electronic device 102 in the shell-type holder 502. In a further embodiment, the carrying case 500 itself may include another (or second) connector interface (not shown), such as a second micro-USB interface, such that an external connector (such as connector 114 shown in FIG. 1) may plug into the carrying case 500 rather than the portable electronic device 102. In this way, an external connector 114 may supply power or data to the portable electronic device 102 by way of the carrying case 500.

FIG. 6A is a plan view of an illustrative portable electronic device 102. The portable electronic device 102 includes the housing 200. The portable electronic device 102 also includes a display 208, which in this example is a touchscreen display. The display 208 shows an image 600, which may be for example a still image, a moving image, a combination of graphics and text, and so forth. The portable electronic device 102 further includes a speaker 212 and a microphone 214, which may be used for telephony functions; the user may hold the speaker 212 to the user's ear and may speak into the microphone 214. The portable electronic device 102 also includes an illustrative detector 218, depicted as an ambient light sensor. The processor (not shown) of the portable electronic device 102 may take action as a function of ambient light as detected by the ambient light sensor, such as increasing or decreasing the illumination of the display 208.

In FIG. 6A, the example image 600 takes up most or all of the display 208. The dashed box 602 represents a subset area of the display 208. As will be discussed below, images may be displayed in a portion of the display 208, such as the subset area 602, with the remainder of the display 208 optionally being idle or deactivated or off.

FIG. 6B is a plan view of the illustrative portable electronic device 102 of FIG. 6A, with the portable electronic device 102 surrounded by the carrying case 300 of FIG. 3. The portable electronic device 102 is held in the holder 302, and the keyboard section 304 rests atop (from a user's perspective) the display 208. The cover section 306 is not visible in FIG. 6B, being hidden behind or beneath the holder 302. The carrying case 300 is in the typing configuration depicted in FIG. 4B.

In this configuration, the detector 218, an ambient light sensor, remains exposed and uncovered while the keyboard section 304 rests atop the display 208. In the embodiment of carrying case 300 shown in FIGS. 3 and 6B, the length of the keyboard section 304 (in the y-direction, with reference to coordinate system 330) is such that the detector 218 cannot ordinarily be covered by the keyboard section 304 while the keyboard section 304 overlays the display 208. In some cases, the shorter length of the keyboard section 304 in comparison to the length of the cover section 306 may offer an additional benefit, in that a shorter keyboard section 304 may be less likely to block functional components of the portable electronic device 102, such as a camera, when the keyboard section 304 is stowed behind the holder 302. Further, the length of the keyboard section 304 may be such that the speaker 212 and the microphone 214 are not obscured. Consequently, a user could use the portable electronic device 102 for telephony, without removing the portable electronic device 102 from the carrying case 300, and while the keyboard section 304 overlays the display 208. The dimensions of the keyboard section 304 may differ from what is shown when the portable electronic device 102 has components such as a detector 218 or a speaker 212 or a microphone 214 in sites different from those shown.

The length of the keyboard section 304 is less than the length of the cover section 306. If the cover section 306 were to be atop the display 208, the detector 218 shown in FIG. 6B would be covered. Consequently, when ambient light is detected (e.g., when an ambient light intensity above a threshold is detected), the processor 202 may determine that the carrying case 300 is not in the stowed configuration depicted in FIG. 4A. By way of signals from one or more other detectors 220 (not shown in FIGS. 6A or 6B), the processor 202 may determine that the carrying case 300 is in the typing configuration depicted in FIGS. 4B and 6B.

Upon determining that the carrying case 300 is in the typing configuration, the processor 202 may control one or more functions of the portable electronic device 102 so that the portable electronic device 102 operates more efficiently or intuitively or otherwise more effectively when the carrying case 300 is in the typing configuration. The processor 202 may, for example, establish wired or wireless communication with the physical keyboard 318, such that the physical keyboard 318 behaves as an input device for the portable electronic device 102. The processor 202 may also shrink, set or adjust the displayed image 600, or otherwise display a modified image 604. The modified image 604 may be displayed, for example, in the subset area 602 of the display 208. FIGS. 6A and 6B illustrate an example of how the full-size image 600 may be modified by reducing the image to fit on the subset area 602 of the display 208. In this example, the reduced image 604 may include one or more side bars 606, which preserve the aspect ratio of the full-size image 600. Other variations are possible. The full-size or original image 600 may be mapped to the modified image 604 in any fashion. For example, the side bars 606 may be made smaller or eliminated, and the aspect ratio of the modified image 604 may be different from the aspect ratio of the full-size image 600. In another example, the modified image 604 shown in the subset area 602 of the display 208 need not be reduced at all, but additional scrolling functionality may be enabled so that a user may move the modified image around the subset area 602.

The image that appears on the subset area 602 of the display 208 is visible to a user through the void 328 in the keyboard section 304. Although the void 328 may be filled by a transparent material such as plastic or glass, an empty void 328 may be advantageous in that the user can interact with the touchscreen by touching the display 208 through the void 328.

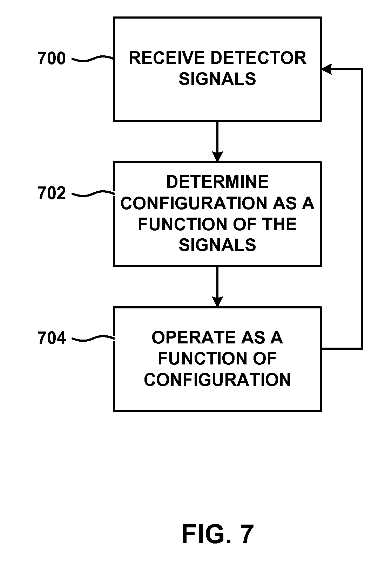

FIG. 7 is a flow diagram illustrating operations carried out by the portable electronic device 102 in relation to a carrying case (such as carrying cases 100, 300 or 500) that has a holder, a keyboard section and a cover section. Colloquially speaking, the portable electronic device 102 senses where the various components of the carrying case are with respect to the portable electronic device 102, and then operates or functions in a useful, efficient or otherwise appropriate manner. For purposes of explanation, it will be assumed that the process of FIG. 7 may be carried out by or under the direction of the processor 202.

The processor 202 receives at least one detector signal (700); that is, the processor receives one or more signals from one or more detectors 218, 220. As discussed above, there are many possible kinds of detectors. Some detectors may respond to existing conditions (such as ambient light or touch), and others may respond to detectable elements 530, 532 (such as magnets or RFID chips). The signals may be received (700) periodically, intermittently, repeatedly, via interrupts, or in any fashion. In some instances, receiving signals (700) may include receiving signals from some detectors but not from others. The signals (which may also include the absence of signals) indicate the location, orientation, or other configuration of the various components of the carrying case with respect to the portable electronic device 102, and the processor 202 determines the configuration of the carrying case as a function of the signals (702). The processor 202 operates one or more functions of the portable electronic device 102 as a function of the configuration of the carrying case (704).

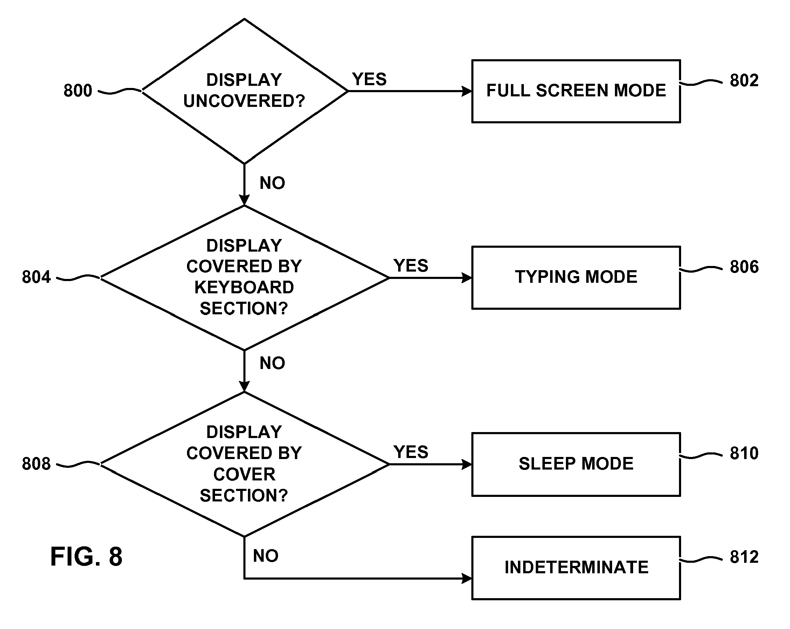

FIG. 8 is a flow diagram illustrating a typical decision chart by which the processor 202 may operates one or more functions of the portable electronic device 102 as a function of the configuration of the carrying case. Generally speaking, operating one or more functions may include enabling, disabling, activating, deactivating, turning on, turning off, speeding up, slowing down, changing power consumption or otherwise affecting the actions or performance or other functionality of one or more electronic components or parts thereof. If the received signals from the detectors indicate that the display 208 is uncovered (that is, not covered by the cover section or the keyboard section), then the processor may operate the display accordingly. The display 208 may be uncovered when, for example, the cover section has been swung like a cover of a book away from the display 208. When the display 208 is uncovered, the processor 202 may operate in a fashion consistent with an uncovered display 208, which may be called a "full screen mode" (802). In the full screen mode, the processor 202 may operate or control one or more functions of the portable electronic device 102 to perform any of the following, for example: an image may be displayed anywhere on the display 208; touchscreen capability may be enabled for the entire display 208; or an input device 210 (such as a button or touch pad or touch region proximate to the display 208) may be enabled.

In the event the signals from the detectors indicate there is some element covering the display 208, the processor 202 may determine what element is covering the display 208. When the element covering the display 208 is the keyboard section (804), the processor 202 may operate in a fashion consistent with the keyboard section overlaying the display 208, which may be called a "typing mode" (806). The display 208 may be covered by the keyboard section when, for example, the carrying case is in the typing configuration shown in FIG. 4B. In the typing mode, as previously discussed, the processor 202 may operate or control one or more functions of the portable electronic device 102 to, for example: establish wired or wireless communication with the physical keyboard so that the physical keyboard can be an input device; receive input signals from the physical keyboard; display a modified image 604; partially or completely deactivate a portion of a display that is overlaid by the physical keyboard; or disable an input or output device, such as an input or output device that may be inaccessible to a user when the keyboard section overlays the display 208.

In the event the signals from the detectors indicate that display 208 is covered by the cover section (808), the processor 202 may cause the portable electronic device 102 to enter a "sleep mode" (810) as described above.

The decisions shown in FIG. 8 need not be made in the particular order shown. Moreover, there need not be any particular detectors or detectable elements used, and the number of possible combinations and arrangements of detectors and detectable elements is too extensive to list. In some circumstances, it may be possible that the processor 202 will be unable to determine from the signals where the various components of the carrying case are with respect to the portable electronic device 102, and the appropriate mode of operation may be indeterminate (812). When the mode of operation is indeterminate, the processor 202 may default to a particular mode (such as full screen mode (802)), or may make a new attempt to determine the configuration of the carrying case as a function of the signals.

As already mentioned, the possible variations on the described carrying cases are many. Carrying cases may include a variety of materials, or dimensions, or detectable elements, or foldable portions, or shapes or fasteners. Many of the examples and variations described herein may be used in concert with one another. The examples discussed herein are not necessarily intended to be exhaustive or exclusive.

Implementation of the carrying case, in use with a portable electronic device, may realize one or more benefits, some of which have been mentioned already. The carrying case can offer some additional physical protection to the portable electronic device, while at the same time giving the user various options for use of the portable electronic device. The user can use the portable electronic device in a full screen mode, for example, or can use the portable electronic device in a typing mode. Arranging the configuration of the carrying case generally requires no tools, and can be accomplished in a matter of seconds; and the portable electronic device may automatically detect the configuration of the carrying case and can set or adjust its own functionality accordingly. For users who desire a touchscreen device but who also enjoy using a physical keyboard, the carrying case makes both manners of use convenient. As the user carries the portable electronic device in the carrying case, the physical keyboard is carried as well, and is readily available for use; when not needed, the physical keyboard can be stowed out of the way. The functionality of the carrying case adds little in terms of size and weight, which may be important considerations for devices that are handheld.

The carrying case can be flexibly adapted for a variety of portable electronic devices have a variety of sizes, shapes, connection interfaces, cameras and other physical features. The carrying case may include physical features other than those previously described, such as handle or a wrist strap. The carrying case may be constructed to resemble an attaché case or a folio.

Further, the portable electronic device, when mated to such a carrying case, may realize other or additional benefits. The portable electronic device may automatically detect when the display of the portable electronic device is covered by the keyboard section or the cover section. When the display is covered by the cover section, the portable electronic device may automatically enter a sleep mode, thereby conserving power. When the display is covered by the keyboard section, the portable electronic device may automatically deactivate or power down a portion of the screen covered by the keyboard section, which may contribute to power conservation. In some embodiments, the detectors in the portable electronic device, which may help the portable electronic device to determine where the various components of the carrying case are with respect to the portable electronic device, may have multiple functions. For example, a light sensor may be used for monitoring ambient light as part of backlight control, or an RFID detector may be used for short-range communication, or a capacitive touch sensor may be used as a user input device. In other words, there may be portable electronic devices that have can use already existing detectors that can be re-purposed to determine the configuration of the carrying cases into which the portable electronic devices are received.

The above-described embodiments are intended to be examples only. Alterations, modifications and variations can be effected to the particular embodiments without departing from the scope of the concept, which is defined by the claims appended hereto.

## Claims

1. A device (100, 300, 500) comprising:
a holder (116, 302, 502) configured to receive a portable electronic device;
a keyboard section (108, 304, 504), the keyboard section comprising a physical keyboard (318), the keyboard section physically coupled to the holder by a second foldable portion (118, 310, 510); and
a cover section (106, 306, 506) physically coupled to the keyboard section by a first foldable portion (110, 308, 508).

2. The device of claim 1, wherein the holder, the keyboard section and the cover section are arranged laterally.

3. The device of any of claims 1 to 2, wherein the keyboard section further comprises a frame (320).

4. The device of claim 3, wherein the frame defines a void (328, 528).

5. The device of any of claims 1 to 4, wherein a length of the keyboard section is less than the length (106L) of the cover section.

6. The device of any of claims 1 to 5, wherein the first foldable portion defines an opening (112, 312, 512).

7. The device of any of claims 1 to 6, wherein the physical keyboard comprises an alphanumeric keyboard.

8. The device of any of claims 1 to 7, wherein the device comprises a detectable element (530, 532).

9. The device of any of claims 1 to 8, wherein the holder comprises a shell-type receptacle (502) sized and shaped to receive the portable electronic device.

10. The device of any of any of claims 1 to 9, further comprising a connector (534) configured to electrically connect with a connector interface on the portable electronic device.
